# EUROPEAN PATENT APPLICATION

(11) **EP 1 432 206 A2**
(43) Date of publication of application: **23.06.2004**
(21) Application number: 03029086.0
(22) Date of filing: 17.12.2003
(51) Int. Cl.: H04L 29/06, H04L 12/28

(54) **Mechanisms for supporting a virtual on-line mobile environment**

(30) Priority: 18.12.2002 US 324579
(71) Applicant: MICROSOFT CORPORATION, Redmond, Washington 98052 (US)
(72) Inventor: Apfel, Darren Alexander, Redmond, Washington 98052 (US)
(74) Representative: Grünecker, Kinkeldey, Stockmair & Schwanhäusser Anwaltssozietät

(57) **Abstract**

Mechanisms that provide the user of a wireless device with a seemingly on-line experience with a network service such as e-mail or instant messaging even though the wireless device is not continuously connected through a carrier network to a server computing system that facilitates the network service. This is accomplished by quickly communicating information required to maintain the on-line experience whether mobile-terminated or mobile-originated. If a data connection is currently established, then the information may be communicated over that data connection. However, if a data connection is not established, the information (or a portion thereof) may be communicated using a transfer mechanism such as SMS that does not require a connection to the carrier network.

## Description

### BACKGROUND OF THE INVENTION

### 1. The Field of the Invention

The present invention relates to network communications technology, and more specifically, to mechanisms for supporting a virtual on-line mobile environment without requiring that a wireless device be continuously connected to the wireless carrier network.

### 2. Background and Related Art

Computing technology has revolutionized the way people work and play and has contributed enormously to the advancement of humankind. Computing systems now come in a wide-variety of forms including, for example, desktop computers, laptop computers, Personal Digital Assistants (PDAs), and even mobile telephones and devices. Many conventional mobile wireless devices such as lap top computers, PDAs and wireless telephones have contributed greatly to our ability to access information and perform network oriented tasks even while we are on the go. For example, many of these mobile wireless devices may facilitate network-oriented applications such as Web surfing, e-mail communicating, instant messaging, and the like.

Conventionally, in order to engage in such network-oriented applications in real-time, the wireless device would be connected to the wireless carrier network if a rich network experience is desired. While connected, the wireless device may communicate over the wireless carrier network to other computing systems even over the Internet. This is of great convenience to their associated users.

Throughout the description and in the claims, being "connected" to a carrier network is defined as "having an active data session established" with the carrier network. If a wireless device does not have an active data session established with the carrier network, then that device is not "connected" with the carrier network as defined in this specification and in the claims, even if that device may be capable of transmitting and receiving information over the carrier network without the use of an active data session. For example, SMS messages may be sent and received without the use of an active data session and thus without a connection.

Nevertheless, there are drawbacks to this form of wireless network communication. For instance, the wireless device consumes more power when connected to the carrier network than it would otherwise use if not connected, or if in standby mode. Maintaining an active data session typically requires more transmission and processing power. If the wireless device is operating on its own battery power, the battery would discharge much quicker than if the wireless device were not connected to the carrier network. Accordingly, the user is imposed with the inconvenience of having to recharge and/or replace the battery more frequently as connection time increases. In some cases, if the user does not have access to a means for recharging the battery and/or a replacement battery, the user will temporarily not have the use of the wireless device. Moreover, connection time to the carrier network is often a key factor in determining how much the carrier will charge the user for its services. More connection time thus means a higher cost in operating the wireless device.

Furthermore, every carrier "cell" (area covered by a carrier's transmitter) has a limited number of active channels available for connections due to bandwidth limitations. Oftentimes, these channels are a valuable commodity, especially when the ratio of phones in the cell to active cell channels is high. When many connections are maintained, the cell may reach capacity and calls may not be originated from or terminated to phones covered by that cell.

Therefore, heavy connection use may preclude widespread deployment of a data service because the cost of augmenting the capacity of all of the cells would be prohibitive. Furthermore, if the demand for connections is greater than the supply, carrier performance is typically degraded resulting often in dropped calls, and the inability to receive or make calls on demand. It is also extremely expensive and challenging to provide more connection capacity. Further capacity may be accomplished by finding a new cell site, getting permission to use that site, and deploying expensive hardware.

Notwithstanding these various detriments in being connected to the carrier network, being connected to the carrier network (i.e., having an active data session established with the carrier network) is viewed as a necessity in order to perform real-time and rich network-oriented tasks. For example, the whole point of instant messaging is to allow individuals to communicate "instantly" or at least relatively quickly so that real-time electronic text conversations may occur. Conventional thinking is that without a constant active data session with the carrier network , one would not be instantly notified of new mail, be able to instantly send mail, send and receive instant messages, instantly update presence information and receive updated presence information, or the like.

There are alternatives to having a connection with the carrier network such as, for example, "polling," or checking the service regularly (often every 5-15 minutes). This technique is ineffective for applications such as instant messaging where an immediate response is required. Another alternative is the use of a "WAP" alert which sends a real-time alert to the device. However, in order to act on the alert, a browser session must be established which requires a persistent data connection while the user completes any operation.

Accordingly, what would be advantageous is a way of performing real-time network-oriented tasks without requiring an active data session be established with the carrier network during the session in which the network-oriented task occurs.

### BRIEF SUMMARY OF THE INVENTION

The foregoing problems with the prior state of the art are overcome by the principles of the present invention, which are directed towards mechanisms that provide the user of a wireless device with a seemingly on-line experience with a network service even though the wireless device is not continuously connected through a carrier network to a server computing system that facilitates the network service. To users who are watching the mobile user, he also seems to be online. In other words, the service simulates the persistence of a mobile data session even though the connection is dropped.

For example, a user may engage in an instant messaging session in which real-time electronic text conversations take place (and presence information is updated in real-time) without even requiring a continuous carrier network connection. Other network services such as e-mail may be supported. Accordingly, since carrier connection time is reduced, the battery life of the wireless device will be extended, and there will typically be lower carrier charges required in order to engage in the network service. Furthermore, network capacity is preserved

When communicating mobile-terminated information from the server computing system to the wireless computing system, the server computing system determines that information associated with a network service is to be communicated to the wireless device in order to maintain an on-line appearance of the service to the user of the wireless device. The user may be given a choice as to what information is to be communicated in real-time, and what information can wait until the next data connection is opened with the server. For example, urgent e-mails might be designated as for real-time communication. Regular e-mails from certain contacts may be designated as for real-time communication, while e-mails from other contacts may wait until a data connection is opened. Typically, if the network service were instant messaging, an incoming instant message, or update to presence information would really be communicated in real-time to the wireless device in order to maintain the appearance of the wireless device being signed into the instant messaging session maintained by the server computing system. If the network service were e-mail, when the server computing system received a new e-mail, a notification of the e-mail as well as the e-mail itself would be communicated in real-time to the wireless device in order to maintain the appearance that the wireless device was signed into the e-mail server.

The server computing system determines whether the wireless device is signed into the service or not. The server computing system may determine that the wireless device is signed into the network service despite the wireless device having no current data connection established with the server computing system. Normally, the wireless device would need to be connected to the carrier network and have an active data connection with the server in order to be signed into a network service.

If the wireless device is signed into the network service yet has no current data connection with the server computing system, then the server computing system transmits at least some of the information to the wireless device using a transport mechanism that does not require that the wireless device have a connection with the carrier network. Sometimes, the amount of information that is may be transmitted in a single message may be less for a transport mechanism that does not require a data connection than transport mechanisms that do require a transport mechanism. For example, Short Message Service (SMS) allows for text message of relatively small size. On the other hand, messages communicated over GPRS or conventional circuit-switched transport mechanisms may allow for much larger messages. If the information to be communicated to the wireless device was small enough, that information could be transmitted using the transport mechanism that did not require a transport mechanism. For example, instant messages and updates to presence information are typically small messages. Accordingly, the server computing system may communicate all of the information needed to maintain the on-line experience to the user without having the wireless device make any connection to the wireless carrier network at all.

On the other hand, the information required to maintain an on-line experience could be a larger e-mail. In that case, perhaps only a portion of the e-mail (e.g., header information and the first portion of the e-mail body) would be transmitted over SMS. The server computing system may prompt the wireless device to establish a data connection with the server computing system to thereby retrieve the remainder of the e-mail. If the wireless device did have a data connection with the server computing system, however, the server computing system could simply use that open data connection in order to communicate the information required to maintain the on-line experience.

When the wireless device needs to communicate information (e.g., outgoing instant messages, presence information, or e-mails) to the server computing system, the wireless device (more specifically, the application that supports the network service) may intelligently identify the best transport mechanism for communicating the information to the server computing system. If there was already a data connection established, the wireless device may simply use that data connection. On the other hand, if there was no data connection, the wireless device may opt to use a transport mechanism such as SMS that does not require the wireless device to be connected to the carrier network. The wireless device may consider the cost of transferring the information, the speed in delivering the information, as well as the current service agreement with the carrier when determining which transport mechanism to use, and whether or not to connect to the carrier network to establish a carrier connection.

Accordingly, whether mobile-terminated or mobile originated, information required to maintain the appearance of an on-line experience is communicated relatively quickly even if the wireless device is not currently connected to the network at the time the information is to be transferred. From the user's perspective, the information is received in a timely manner thereby giving the approximate appearance of the wireless device having a continuous connection with the server computing system.

Additional features and advantages of the invention will be set forth in the description that follows, and in part will be obvious from the description, or may be learned by the practice of the invention. The features and advantages of the invention may be realized and obtained by means of the instruments and combinations particularly pointed out in the appended claims. These and other features of the present invention will become more fully apparent from the following description and appended claims, or may be learned by the practice of the invention as set forth hereinafter.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:

Figure 1 illustrates a suitable operating environment for the principles of the present invention;

Figure 2 illustrate a wireless device communicating over a carrier network to a server computing system;

Figure 3 illustrates a flowchart of a method for the server computing system supporting the on-line user experience in accordance with the principles of the present invention; and

Figure 4 illustrates a flowchart of a method for the wireless device supporting the on-line user experience in accordance with the principles of the present invention.

### DETAILED DESCRIPTION OF THE PREFERRED EMBODIMENTS

The principles of the present invention related to mechanisms that provide the user of a wireless device with a seemingly on-line experience with a network service even though the wireless device is not continuously connected through a carrier network to a server computing system that facilitates the network service. This is accomplished by communicating in real-time information that is desired to maintain the on-line experience whether the information is in-bound to the wireless device (i.e., hereinafter "mobile-terminated") or out-bound to the server computing system (hereinafter, "mobile-originated"). If a connection with the carrier network is currently established, then the information may be communicated over that data connection. However, if a data connection is not established with the carrier network, the information (or a portion thereof) may be communicated using a transfer mechanism such as SMS that does not require a connection to the carrier network.

Embodiments within the scope of the present invention include computer-readable media for carrying or having computer-executable instructions or data structures stored thereon. Such computer-readable media can be any available media which can be accessed by a general purpose or special purpose computer. By way of example, and not limitation, such computer-readable media can comprise physical computer-readable media such as RAM, ROM, EEPROM, CD-ROM or other optical disk storage, magnetic disk storage or other magnetic storage devices, or any other medium which can be used to carry or store desired program code means in the form of computer-executable instructions or data structures and which can be accessed by a general purpose or special purpose computer.

When information is transferred or provided over a network or another communications connection (either hardwired, wireless, or a combination of hardwired or wireless) to a computer, the computer properly views the connection as a computer-readable medium. Thus, any such a connection is properly termed a computer-readable medium. Combinations of the above should also be included within the scope of computer-readable media. Computer-executable instructions comprise, for example, any instructions and data which cause a general purpose computer, special purpose computer, or special purpose processing device to perform a certain function or group of functions. The computer-executable instruction may be, for example, binaries, intermediate format instructions such as assembly language, or even source code.

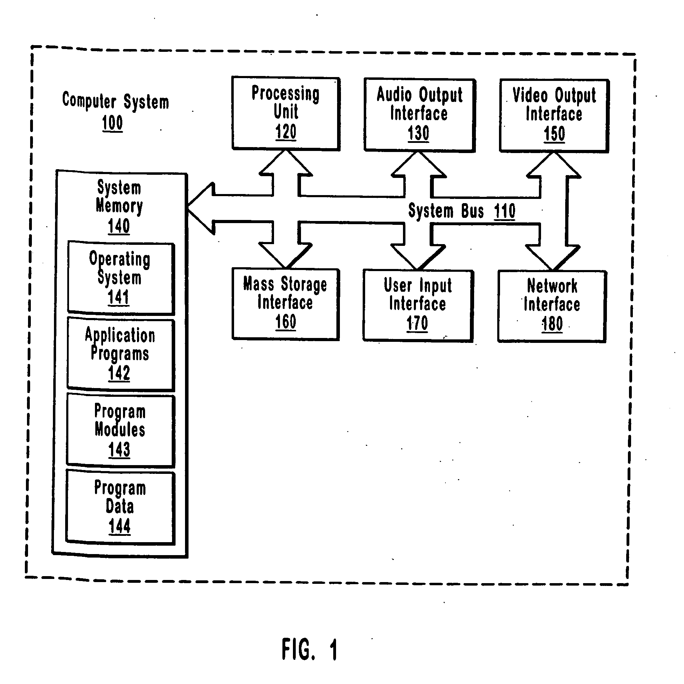

Figure 1 and the following discussion are intended to provide a brief, general description of a suitable computing environment in which the invention may be implemented. Although not required, the invention will be described in the general context of computer-executable instructions, such as program modules, being executed by computer systems. Generally, program modules include routines, programs, objects, components, data structures, and the like, which perform particular tasks or implement particular abstract data types. Computer-executable instructions, associated data structures, and program modules represent examples of the program code means for executing acts of the methods disclosed herein.

With reference to Figure 1, a suitable operating environment for the principles of the invention includes a general-purpose computer system in the form of a computer system 100. Computer system 100 may be, for example, a personal computer that has been adapted to perform the operations disclosed herein.

Computer system 100 includes a user input interface 170 that receives information from an input device, such as, for example, a keyboard, microphone, mouse, or in the case of a smaller mobile device, a touch pad. An input device can be coupled to user input interface 170 so as to enable the entry of information. An input device may transfer information over such a coupling in response to preprogrammed data or user manipulation of the input device.

Computer system 100 includes a video output interface 150 that provides a video output signal to external video display devices. Computer system 100 may be integrally positioned with or separate from a video display device, such as, for example, a color or monochrome computer monitor. A video display device can be coupled to video output interface 150 so as to receive a provided video output signal. In the case of a smaller mobile device, the video output interface may interface with a smaller display.

Similarly, computer system 100 includes an audio output interface 130 that provides an audio output signal to external audio output devices. Computer system 100 may also be integrally positioned with or separate from an audio system, which may include a speaker or other device capable of emitting sound data. An audio system can be coupled to audio output interface 130 so as to receive a provided audio output signal.

Computer system 100 includes processing unit 120, which allows for complex and flexible general-purpose processing capabilities. Processing unit 120 executes computer-executable instructions designed to implement features of computer system 100, including features of the present invention. Processing unit 120 is coupled to system bus 110, which also interconnects various other system components including system memory 140.

System memory 140 generally represents a wide variety of volatile and/or nonvolatile memories and may include types of memory previously discussed. However, the particular type of memory used in computer system 100 is not important to the present invention. Program code means comprising one or more program modules may be stored in system memory 140. The one or more program modules may include an operating system 141, one or more application programs 142, other program modules 143, and program data 144.

Computer system 100 may include mass storage interface 160, which can read data from and/or write data to a mass storage device, such as, for example, a magnetic disk or optical disk. A mass storage device can be coupled to mass storage interface 160 so as to enable the reading and writing of data. When a mass storage device is coupled to mass storage interface 160, one or more program modules including operating system 141, application programs 142, other program modules 143, and program data 144 may be stored in the mass storage device. A smaller mobile device, however, may not have any such mass storage.

Computer system 100 is connectable to networks, such as, for example, an office-wide or enterprise-wide computer network, an intranet, the Internet, and/or a carrier network. Computer system 100 includes network interface 180, through which computer system 100 receives data from external sources and/or transmits data to external sources. Computer system 100 may exchange data with external sources, such as, for example, remote processor systems and/or databases over such a network.

While Figure 1 illustrates an example of a computing system that may implement the principles of the present invention, any computing system may implement the features of the present invention. In the description and in the claims, a "computing system" is defined broadly as any hardware component or components that are capable of using software to perform one or more functions. Examples of computing systems include desktop computers, laptop computers, Personal Digital Assistants (PDAs), telephones, or any other system or device that has processing capability.

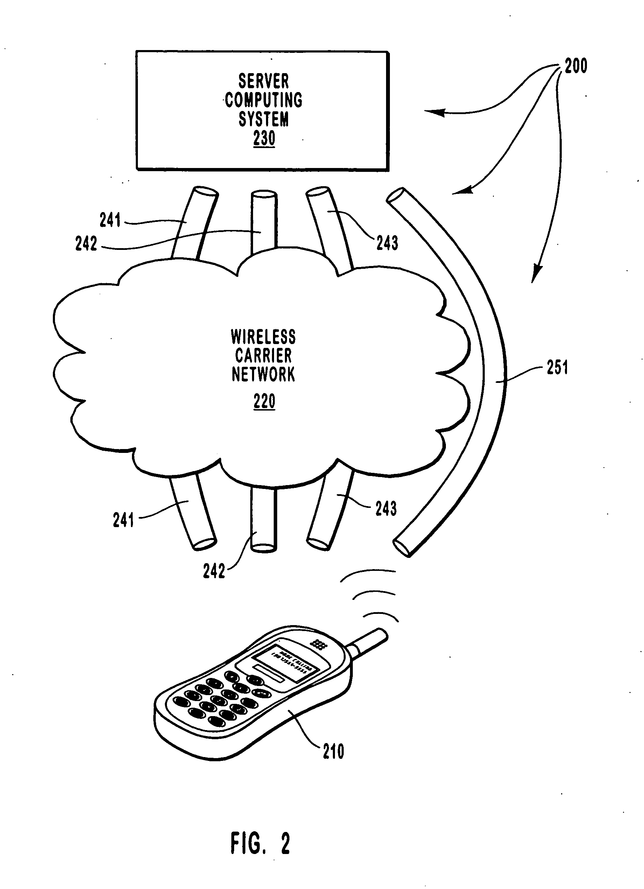

Figure 2 illustrates a network environment 200 in which the principles of the present invention may operate. The network environment 200 includes a wireless computing system 210 (hereinafter also referred to as wireless device 210). The wireless device 210 is capable of communicating with a server computing system 230 over a wireless carrier network 220. A "wireless computing system" or a "wireless device" is defined as any computing system that has the ability to communicate wirelessly, even if that computing system is also capable of communicating over a wired network.

The wireless device 210 is capable of communicating over the wireless carrier network 220 to the server computing system 230 by first establishing a connection with the wireless carrier network 220 (i.e., by establishing an active data session with the wireless carrier network 220), and then using one of potentially several transport protocols to establish a data connection with the server computing system 230. In the illustrated example, there are three different types of data connections possible using three different types of transport protocols. The data connections include data connections 241, 242 and 243. For example, data connection 241 may be a GPRS data connection, data connection 242 may be a circuit-switched data connection, and data connection 243 may be a packet-switched data connection such as Wireless Code Division Multiple Access (WCDMA). The data connections 241, 242, 243, while being of different types, all have the common characteristic of requiring that a connection to the wireless carrier network 220 first be established before the data connection can be established. Over time, however, the typical types of transport mechanism in use may change without affecting the operation of the principles of the present invention.

On the other hand, the wireless device 210 is also capable of sending and receiving information using a transport mechanism 251 that does not require a connection to the wireless carrier network before being able to communicate information. An example of such a transport mechanism includes Short Message Service (SMS). Typically used transport mechanisms that do not require a connection to the wireless carrier network may also evolve over time without affecting the operation of the principles of the present invention.

The wireless device 210 signs into a network service such as an instant messaging service or an e-mail service. Conventionally, in order to maintain a session with this network service, the wireless device 210 would have a data connection open during the entire period of the session. However, in accordance with the principles of the present invention, the wireless device 210 and the server computing system 230 collaborate to provide the user of the signed-in wireless device 210 with an on-line experience with respect to the signed-in network service regardless of whether the wireless device 210 continuously maintains an open data connection with the server computing system 230. The on-line experience is facilitated by making sure that mobile-terminated information and mobile-originated information that is vital to maintaining the on-line experience is communicated regardless of whether there is a current data connection opened.

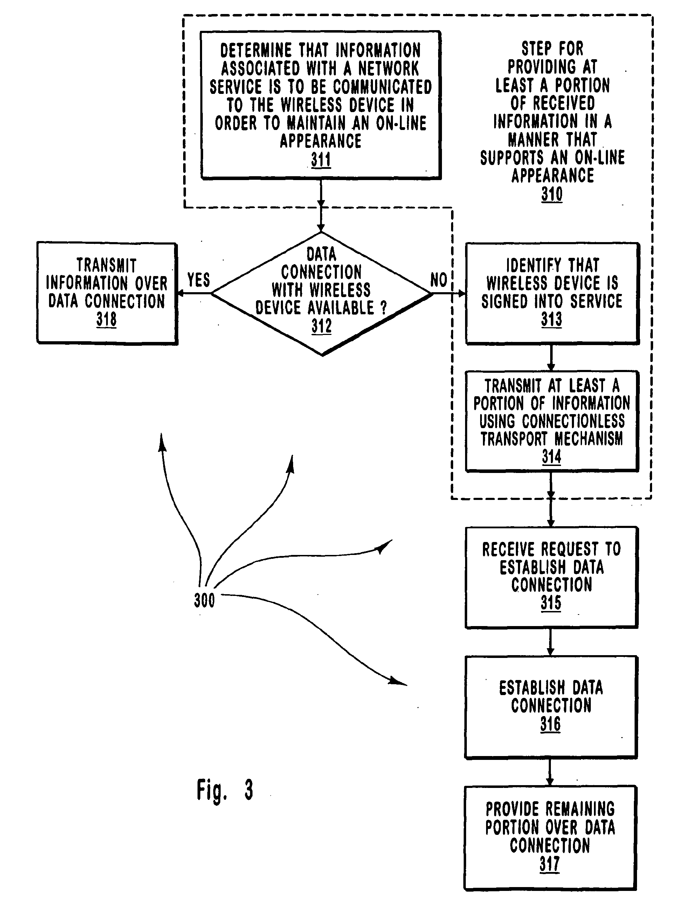

Figure 3 illustrates a method 300 for supporting the on-line experience with respect to incoming information that is to be communicated from the server computing system 230 to the wireless device 210. The method 300 includes a functional, result-oriented step for providing at least a portion of received information to the wireless device in a manner that supports an on-line appearance of the service to a user of the wireless device (step 310). This functional, result-oriented step includes any corresponding acts for accomplishing this result. However, in the illustrated embodiment of Figure 3, the step includes corresponding acts 311, 313 and 314.

More specifically, the step 310 includes the server computing system determining that information associated with a network service is to be communicated to the wireless device in order to maintain an on-line appearance of the service to the user of the wireless device. For example, if the network service was an instant messaging service, the information could be a mobile-terminated instant message, or updated presence information. On the other hand, if the network service was an e-mail service, the information could be a received e-mail or a notification thereof. In one embodiment, the user may be given a choice as to what information is to be communicated in real-time, and what information can wait until the next data connection is opened with the server. For example, urgent e-mails might be designated as for real-time communication. Regular e-mails from certain contacts may be designated as for real-time communication, while e-mails from other contacts may wait until a data connection is opened. The user preferences may be consulted when determining that the information is to be communicated to the wireless device.

If a data connection is not available (NO in decision block 312), the server computing system identifies that the wireless device is signed into the service (act 313) despite there being no current data connection established with the server computing system. The server computing system then transmits at least a portion of the information to the wireless device using a transport mechanism that does not require that the wireless device have a connection with the carrier network (act 314). An example of such a transport mechanism is SMS. In some cases, all of the information may be transmitted using that transport mechanism. For example, updated presence information may typically be expressed in a text string that is short enough to fit in a single SMS message. However, other information such as larger e-mails, may not be expressed in the single SMS message. Accordingly, perhaps only the header information and a portion of the e-mail are included in the SMS message.

If less than all of the information was transmitted using the transport mechanism that does not require a data connection, the wireless device requests that a data connection be established. For example, the wireless device may detect user input that all of the information is desired, or may make the request automatically without synchronous user input. This request is received by the server computing system (act 315), whereupon the server computing system cooperatively establishes the data connection (act 316), and then provides a remaining portion of the received information over the data connection to the wireless device (act 317). The remaining portion of the information may have been placed in a queue in anticipation of the request for the remaining information. The user of such a queue would typically allow the information to be provided relatively quickly. Furthermore, full synchronization may be avoided when the device does connect to acquire the information.

After determining that the information needs to be transmitted to the wireless device (act 311), if there was a data connection available, then the server computing system may instead transfer the information over the data connection (act 318). Accordingly, the mobile-terminated information that was needed to maintain the on-line appearance is quickly received regardless of whether or not the wireless device was currently connected to the wireless carrier network. If the wireless device was connected, then the information is quickly received over the data connection as might be expected. However, even if the wireless device was not connected, then the information is still quickly received either entirely over the connectionless transport mechanism, or after quickly establishing the data connection.

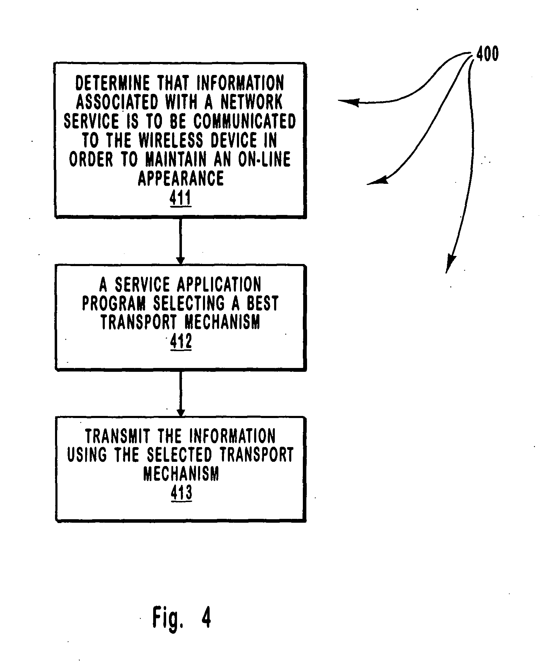

Figure 4 illustrates a method 400 for supporting the on-line experience with respect to mobile-originated information and is implemented by the wireless device. The wireless device first determines that information associated with a network service is to be communicated from the wireless device to the server computing system in order to maintain an on-line appearance of the service to the user of the wireless device (act 411). If the service was instant message, the information could be a mobile-originated instant message, or updated presence information. If the service was e-mail, the information could be an e-mail that the user has just indicated should be presently sent.

The application program that supports the service (e.g., an instant messenger or e-mail application) selects a transport mechanism from among the plurality of transport mechanisms to use when transmitting the information to the server computing system (act 412).

It may be that the transport mechanism that does not require a data connection is selected. For example, if the information may be placed in a format acceptable to that transport mechanism (e.g., is text or may be easily encoded as text when the transport mechanism is SMS), then the connectionless transport mechanism may be used when the information is small enough to be communicated in a single message. For example, updated presence information may be expressed as text and will likely be well within the length limits for a single SMS message. Accordingly, updated presence information (or very short e-mails) may be sent using the connectionless transport mechanism. Also, cost may be factored in when deciding which transport mechanism to use.

The connectionless transport mechanism may also be chosen in cases in which establishing a data connection is not possible. For example, the wireless device may receive an incoming telephone call while engaged in an instant messaging session. The establishment of a telephone call will often render a data connection impossible depending on the capabilities of the wireless device. Accordingly, the wireless device may send updated presence information via SMS to reflect that the user of the wireless device is not available for instant messaging (due to being preoccupied by the telephone call).

Of course, the wireless device may also select transport mechanisms that do require a data connection such as, for example, GPRS, a circuit-switched, or a packet switched transport mechanism if the cost is reasonable and/or if there is no way to transmit the information over the connectionless transport mechanism. Once the information is transmitted over the data connection (act 413), however, the wireless device has the option of breaking down the data connection, and disconnecting from the carrier network, while still being able to feel as though information vital to the on-line experience is quickly sent and received in real-time.

In accordance with the principles of the present invention, the user need not be connected to the carrier network continuously in order to remain signed-into and engaged with a network service such as instant messaging or e-mail. Accordingly, the on-line experience of a user of the wireless device is maintained while reducing the carrier costs associated with the on-line experience.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes, which come within the meaning and range of equivalency of the claims, are to be embraced within their scope.

What is claimed and desired secured by United States Letters Patent is:

## Claims

1. A method in a wireless carrier network that includes a server computing system and a wireless device that is capable of establishing a data connection with the server computing system by first establishing a connection with a carrier network that intervenes between the wireless device and the server computing system, the method for the server computing system enabling the wireless device to engage with the server computing system so as to appear continuously on-line with the server computing system during a period of time without the wireless device having to be continuously connected with the carrier network during that period of time, the method comprising the following:
an act of determining that information associated with a network service is to be communicated to the wireless device in order to maintain an on-line appearance of the service to the user of the wireless device;
an act of determining that the wireless device is signed into the service despite there being no current data connection established with the server computing system; and
an act of transmitting at least a portion of the information to the wireless device using a transport mechanism that does not require that the wireless device have an active data session with the carrier network.

2. A method in accordance with Claim 1, wherein the act of transmitting at least a portion of the information to the wireless device comprising the following:
an act of transmitting a preview of part of the information to the wireless device.

3. A method in accordance with Claim 1, wherein the transmitted information is less than all of the received information, the method further comprising the following:
after transmitting the at least a portion of the information, an act of receiving a request from the wireless device to establish a data connection with the server computing system;
an act of establishing a data connection with the wireless device; and
an act of providing a remaining portion of the received information over the data connection to the wireless device.

4. A method in accordance with Claim 3, further comprising the following:
an act of placing the remaining portion of the received information in a queue.

5. A method in accordance with Claim 1, wherein the act of transmitting at least a portion of the information to the wireless device using a transport mechanism that does not require that the wireless device have a connection with the carrier network comprises the following:
an act of transmitting at least the portion of the information to the wireless device using Short Messaging Service (SMS).

6. A method in accordance with Claim 1, wherein the act of determining that information associated with a network service is to be communicated to the wireless device in order to maintain an on-line appearance of the service to the user of the wireless device comprises the following:
an act of determining that an instant message is to be communicated to the wireless device, the network service being an instant messaging service.

7. A method in accordance with Claim 1, wherein the act of determining that information associated with a network service is to be communicated to the wireless device in order to maintain an on-line appearance of the service to the user of the wireless device comprises the following:
an act of determining that instant messaging presence information is to be communicated to the wireless device, the network service being an instant messaging service.

8. A method in accordance with Claim 1, wherein the act of determining that information associated with a network service is to be communicated to the wireless device in order to maintain an on-line appearance of the service to the user of the wireless device comprises the following:
an act of determining that a notification of a newly received e-mail is to be communicated to the wireless device, the network service being an e-mail service.

9. A method in accordance with Claim 1, wherein the act of determining that information associated with a network service is to be communicated to the wireless device in order to maintain an on-line appearance of the service to the user of the wireless device comprises the following:
an act of determining that a newly received e-mail is to be communicated to the wireless device, the network service being an e-mail service.

10. A computer program product for use in a wireless carrier network that includes a server computing system and a wireless device that is capable of establishing a data connection with the server computing system by first establishing a connection with a carrier network that intervenes between the wireless device and the server computing system, the computer program product for implementing a method for the server computing system enabling the wireless device to engage with the server computing system so as to appear continuously on-line with the server computing system during a period of time without the wireless device having to be continuously connected with the carrier network during that period of time, the computer program product comprising one or more computer-readable media having thereon the following:
computer-executable instructions for determining that information associated with a network service is to be communicated to the wireless device in order to maintain an on-line appearance of the service to the user of the wireless device;
computer-executable instructions for determining that the wireless device is signed into the service despite there being no current data connection established with the server computing system; and
computer-executable instructions for causing at least a portion of the information to be transmitted to the wireless device using a transport mechanism that does not require that the wireless device have a connection with the carrier network.

11. A computer program product in accordance with Claim 10, wherein the one or more computer-readable media are physical storage media.

12. A computer program product in accordance with Claim 11, wherein the physical storage media is system memory.

13. A computer program product in accordance with Claim 11, wherein the physical storage media is a persistent storage media.

14. A computer program product in accordance with Claim 10, wherein the transmitted information is less than all of the received information, the one or more computer-readable media further having thereon the following:
computer-executable instructions for detecting receipt of a request from the wireless device to establish a data connection with the server computing system after transmitting the at least a portion of the information;
computer-executable instructions for establishing a data connection with the wireless device; and
computer-executable instructions for providing a remaining portion of the received information over the data connection to the wireless device.

15. A computer program product in accordance with Claim 10, wherein the computer-executable instructions for causing at least the portion of the information to be transmitted to the wireless device using a transport mechanism that does not require that the wireless device have a connection with the carrier network comprise the following:
computer-executable instructions for causing at least the portion of the information to be transmitted to the wireless device using Short Message Service (SMS).

16. A computer program product in accordance with Claim 10, wherein the computer program product for determining that information associated with a network service is to be communicated to the wireless device in order to maintain an on-line appearance of the service to the user of the wireless device comprise the following:
computer-executable instructions for determining that an instant message is to be communicated to the wireless device, the network service being an instant messaging service.

17. A computer program product in accordance with Claim 10, wherein the computer program product for determining that information associated with a network service is to be communicated to the wireless device in order to maintain an on-line appearance of the service to the user of the wireless device comprise the following:
computer-executable instructions for determining that instant messaging presence information is to be communicated to the wireless device, the network service being an instant messaging service.

18. A computer program product in accordance with Claim 10, wherein the computer program product for determining that information associated with a network service is to be communicated to the wireless device in order to maintain an on-line appearance of the service to the user of the wireless device comprise the following:
computer-executable instructions for determining that a notification of a newly received e-mail is to be communicated to the wireless device, the network service being an e-mail service.

19. A computer program product in accordance with Claim 10, wherein the computer program product for determining that information associated with a network service is to be communicated to the wireless device in order to maintain an on-line appearance of the service to the user of the wireless device comprise the following:
computer-executable instructions for determining that a newly received e-mail is to be communicated to the wireless device, the network service being an e-mail service.

20. A method in a wireless carrier network that includes a server computing system and a wireless device that is capable of establishing a data connection with the server computing system by first establishing a connection with a carrier network that intervenes between the wireless device and the server computing system, the method for the server computing system enabling the wireless device to engage with the server computing system so as to appear continuously on-line with the server computing system during a period of time without the wireless device having to be continuously connected with the carrier network during that period of time, the method comprising the following:
a step for providing at least a portion of received information to the wireless device in a manner that supports an on-line appearance of the service to a user of the wireless device;
an act of receiving a request from the wireless device to establish a data connection with the server computing system;
an act of establishing a data connection with the wireless device; and
an act of providing a remaining portion of the received information over the data connection to the wireless device.

21. A method in accordance with Claim 20, wherein the step for providing at least a portion of receiving information to the wireless device in a manner that supports an on-line appearance of the service to a user of the wireless device comprises the following:
an act of determining that information associated with a network service is to be communicated to the wireless device in order to maintain an on-line appearance of the service to the user of the wireless device;
an act of determining that the wireless device is signed into the service despite there being no current data connection established with the server computing system; and
an act of transmitting at least a portion of the information to the wireless device using a transport mechanism that does not require that the wireless device have a connection with the carrier network.

22. A method in a wireless carrier network that includes a server computing system and a wireless device that is capable of establishing a data connection with the server computing system by first establishing a connection with a carrier network that intervenes between the wireless device and the server computing system, the method for the server computing system enabling the wireless device to engage with the server computing system so as to appear continuously on-line with the server computing system during a period of time without the wireless device having to be continuously connected with the carrier network during that period of time, the method comprising the following:
an act of determining that information associated with a network service is to be communicated to the wireless device in order to maintain an on-line appearance of the service to the user of the wireless device; and
an act of transmitting the information to the wireless device over the data connection regardless of whether there is a current active data session with the wireless device.

23. A method in a wireless carrier network that includes a server computing system and a wireless device that is capable of establishing a data connection with the server computing system by first establishing a connection with a carrier network that intervenes between the wireless device and the server computing system, the method for the server computing system enabling the wireless device to engage with the server computing system so as to appear continuously on-line with the server computing system during a period of time without the wireless device having to be continuously connected with the carrier network during that period of time, the method comprising the following:
an act of determining that first information associated with a network service is to be communicated to the wireless device in order to maintain an on-line appearance of the service to the user of the wireless device;
an act of identifying that the wireless device is signed into the service and has a data connection established with the wireless device;
an act of transmitting the first information to the wireless device over the data connection;
an act of later determining that second information associated with a network service is to be communicated to the wireless device in order to maintain an on-line appearance of the service to the user of the wireless device;
an act of identifying that the wireless device is signed into the service despite there being no current data connection established with the server computing system; and
an act of transmitting at least a portion of the second information to the wireless device using a transport mechanism that does not require that the wireless device have a connection with the carrier network.

24. A method in accordance with Claim 23, wherein the transport mechanism is an SMS transport mechanism.

25. A method in accordance with Claim 24, wherein the data connection is a GPRS data connection.

26. A method in accordance with Claim 24, wherein the data connection is a circuit-switched data connection.

27. A method in accordance with Claim 24, wherein the data connection is a packet-switched data connection.

28. A method in accordance with Claim 23, wherein the data connection is a GPRS data connection.

29. A method in accordance with Claim 23, wherein the data connection is a circuit-switched data connection.

30. A method in accordance with Claim 23, wherein the data connection is a packet-switched data connection.

31. A computer program product for implementing the method recited in Claim 23.

32. A method in a wireless carrier network that includes a server computing system and a wireless device that is capable of establishing a data connection with the server computing system by first establishing a connection with a carrier network that intervenes between the wireless device and the server computing system, the method for the wireless device engaging with the server computing system so as to appear continuously on-line with the server computing system during a period of time without the wireless device having to be continuously connected with the carrier network during that period of time, the method comprising the following:
an act of determining that information associated with a network service is to be communicated from the wireless device to the server computing system in order to maintain an on-line appearance of the service to the user of the wireless device;
an act of an application program that supports the service selecting a transport mechanism from among a plurality of transport mechanisms to use when transmitting the information to the server computing system, the plurality of transport mechanisms including one or more transport mechanisms that require a data connection and one or more transport mechanisms that do not require a data connection; and
an act of transmitting the information to the server computing system using the selected transport mechanism over the carrier network.

33. A method in accordance with Claim 32, wherein one of the one or more transport mechanisms that do not require a data connection is an SMS transport mechanism.

34. A method in accordance with Claim 33, wherein the one or more transport mechanisms that require a data connection includes one or more of GPRS, a circuit-switched transport mechanism, and a packet switched transport mechanism.

35. A method in accordance with Claim 32, wherein the one or more transport mechanisms that require a data connection includes one or more of GPRS, a circuit-switched transport mechanism, and a packet switched transport mechanism.

36. A method in accordance with Claim 32, wherein the network service is instant messaging, the information comprising an instant message.

37. A method in accordance with Claim 32, wherein the network service is instant messaging, the information comprising updated instant messaging presence information.

38. A method in accordance with Claim 32, wherein the network service is e-mail, the information comprising a mobile-originated e-mail.

39. A method in accordance with Claim 32, wherein the act of an application program that supports the service selecting a transport mechanism from among a plurality of transport mechanisms to use when transmitting the information to the server computing system comprises the following:
an act of the application program selecting one of the one or more transport mechanisms that do not require a data connection.

40. A method in accordance with Claim 39, wherein a data connection is not possible due to a current voice connection at the wireless device.

41. A method in accordance with Claim 40, wherein the information comprises presence information that notifies other instant messaging participants that the user is not available.

42. A method in accordance with Claim 39, wherein the one or more data transport mechanisms are more expensive to use than the one or more transport mechanisms that do not require a data connection.

43. A method in accordance with Claim 39, wherein the information may be transmitted in a single message supported by one or the one or more transport mechanisms that do not require a data connection.

44. A computer program product for use in a wireless carrier network that includes a server computing system and a wireless device that is capable of establishing a data connection with the server computing system by first establishing a connection with a carrier network that intervenes between the wireless device and the server computing system, the computer program product for implementing a method for the server computing system enabling the wireless device to engage with the server computing system so as to appear continuously on-line with the server computing system during a period of time without the wireless device having to be continuously connected with the carrier network during that period of time, the computer program product comprising one of more computer-readable media having thereon an application program comprising the following:
computer-executable instructions for determining that information associated with a network service is to be communicated from the wireless device to the server computing system in order to maintain an on-line appearance of the service to the user of the wireless device;
computer-executable instructions for selecting a transport mechanism from among a plurality of transport mechanisms to use when transmitting the information to the server computing system, the plurality of transport mechanisms including one or more transport mechanisms that require a data connection and one or more transport mechanisms that do not require a data connection; and
computer-executable instructions for causing the information to be transmitted to the server computing system using the selected transport mechanism over the carrier network.

45. A computer program product in accordance with Claim 44, wherein the one or more computer-readable media are physical storage media.

46. A computer program product in accordance with Claim 45, wherein the physical storage media is system memory.

47. A computer program product in accordance with Claim 45, wherein the physical storage media is a persistent storage media.
